(19) Europäisches Patentamt
European Patent Office
Office européen des brevets

(11) EP 4 378 973 A1

(12) **EUROPEAN PATENT APPLICATION**
published in accordance with Art. 153(4) EPC

(43) Date of publication:
**05.06.2024 Bulletin 2024/23**

(21) Application number: **22849021.5**

(22) Date of filing: **31.05.2022**

(51) International Patent Classification (IPC):
***C08G 59/56*** *(2006.01)* ***C08J 5/24*** *(2006.01)*

(52) Cooperative Patent Classification (CPC):
**C08G 59/56; C08J 5/24;** Y02E 10/72

(86) International application number:
**PCT/JP2022/022131**

(87) International publication number:
**WO 2023/007942 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2021 JP 2021124280**

(71) Applicant: **MITSUBISHI GAS CHEMICAL COMPANY, INC.**
**Chiyoda-ku**
**Tokyo 100-8324 (JP)**

(72) Inventors:
- **TOMAKI, Keisuke**
**Hiratsuka-shi, Kanagawa 254-0016 (JP)**
- **IKEUCHI, Kousuke**
**Hiratsuka-shi, Kanagawa 254-0016 (JP)**
- **KOUNO, Kazuki**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

# (54) EPOXY RESIN CURING AGENT, EPOXY RESIN COMPOSITION AND CURED PRODUCT THEREOF, FIBER-REINFORCED COMPOSITE, AND WIND POWER GENERATION BLADE

(57) The present invention provides an epoxy resin curing agent comprising: a component (a1), which is a polyether polyamine; a component (a2), which is an aliphatic polyamine having an alicyclic structure; and a component (a3), which is an aliphatic polyamine having an aromatic ring. Also provided are: an epoxy resin composition and a cured product thereof; a fiber-reinforced composite material comprising the cured product of the epoxy resin composition and a reinforcing fiber; and a wind power generation blade.

EP 4 378 973 A1

## Description

Technical Field

The present invention relates to an epoxy resin curing agent, an epoxy resin composition and a cured product thereof, a fiber-reinforced composite material comprising the cured product of the epoxy resin composition and a reinforcing fiber, and a wind power generation blade comprising the fiber-reinforced composite material.

Background Art

Fiber-reinforced composite materials (hereinafter, also referred to as "FRP (Fiber Reinforced Plastics)") have extremely high elastic modulus and strength, and thus have been attracting attention as an alternative material to metal. Demand for FRP is expected to accelerate, especially for automotive structural material applications, wind power generation blade applications, pressure vessel applications, and aerospace applications, and thus demand for reinforcing fiber and matrix resin such as epoxy resin, which are used for FRP, has also been increasing in recent years.

Meanwhile, since the method of molding FRP is different in each of the automotive structural material applications, wind power generation blade applications, pressure vessel applications, and aerospace applications, characteristics required for matrix resin for FRP are also different depending on the application.

For example, wind power generation blades have been molded by infusion molding, the Va-RTM process (vacuum assist resin transfer molding), or the light-RTM process. In these processes, for example, reinforcing fiber is previously placed in a mold with an upper mold and a lower mold using film or FRP, and the inside of the mold is evacuated and the mold is filled with an epoxy resin composition, which is a matrix resin, at atmospheric pressure to impregnate the reinforcing fiber with the epoxy resin composition, and then the epoxy resin is cured to perform molding.

In infusion molding, the Va-RTM process, and the light-RTM process, it usually takes about several ten minutes to fill a mold with an epoxy resin composition prepared by mixing an epoxy resin and an epoxy resin curing agent due to the nature of the molding processes. Thus, the epoxy resin composition to be used in these molding processes is required to have a long pot life.

Epoxy resin compositions for the wind power generation blade applications have also been known, and isophoronediamine, a polyamine compound with a polyether skeleton, or the like is used as the epoxy resin curing agent.

For example, PTL1 discloses an epoxy resin composition containing an epoxy resin with a predetermined composition and a curing agent containing a polyether amine curing agent D230, isophoronediamine IPDA, and a third amine accelerator K54 each in a predetermined range as a vacuum induction epoxy resin composition for wind power generation blades having low viscosity and high processing performance.

In addition, PTL2 discloses a blend containing: an epoxy resin component containing one or more epoxy resins selected from the group of aromatic epoxy resins and/or cyclic aliphatic epoxy resins, a cyclic carbonate having 1 to 10 carbon atoms, and one or more predetermined reactive diluents, each in a predetermined range; and a curing agent containing one or more polyalkoxypolyamines, one or more further amines selected from the group of aromatic, arylaliphatic, cyclic aliphatic, heterocyclic, and aliphatic polyamines having at least 3 carbon atoms and at least 4 reactive NH functional groups in the primary and/or secondary amino groups, and a predetermined catalyst each in a predetermined range, in which the ratio of the total of the epoxy resins and cyclic carbonate in the epoxy resin component to the amine equivalent in the curing agent is in a specific range. It is described that the blend has flowability sufficient for the Va-RTM process, can be completely cured in a short time, and satisfies mechanical requirements (for example, high tensile strength, elongation at break, and bending resistance, as well as thermal stability required for use in large fiber-reinforced members) in order to produce fiber-reinforced large members, especially rotor blades for wind power generation plants.

Citation List

Patent Literature

PTL1: CN 104151780 A
PTL2: JP 2015-511264 A

## Summary of Invention

### Technical Problem

As described above, epoxy resin compositions to be used in molding by the Va-RTM process or the like are required to have a long pot life. Furthermore, for epoxy resin compositions to be used for the FRP matrix resin, it is also important to be able to obtain FRP having high elasticity.

In addition, among the wind power generation blade applications, for wind power generation blades to be used offshore, excellent salt water resistance is also desirable. However, it was difficult to satisfy all of these required characteristics with the disclosed technologies in PTL1 and PTL2.

An object of the present invention is to provide an epoxy resin curing agent that can provide an epoxy resin composition that has a long pot life and is suited for molding wind power generation blades having high elasticity and excellent salt water resistance by the Va-RTM process or the like, an epoxy resin composition and a cured product thereof, a fiber-reinforced composite material comprising the cured product of the epoxy resin composition and a reinforcing fiber, and a wind power generation blade.

### Solution to Problem

The present inventors have found that the above problem can be solved by an epoxy resin curing agent comprising: a polyether polyamine; an aliphatic polyamine having an alicyclic structure; and an aliphatic polyamine having an aromatic ring.

Accordingly, the present invention relates to the following.

[1] An epoxy resin curing agent comprising: a component (a1), which is a polyether polyamine; a component (a2), which is an aliphatic polyamine having an alicyclic structure; and a component (a3), which is an aliphatic polyamine having an aromatic ring.
[2] An epoxy resin composition comprising an epoxy resin and the epoxy resin curing agent according to the above [1].
[3] A cured product of the epoxy resin composition according to the above [2].
[4] A fiber-reinforced composite material comprising the cured product of the epoxy resin composition according to the above [3] and a reinforcing fiber.
[5] A wind power generation blade comprising the fiber-reinforced composite material according to the above [4].

### Advantageous Effects of Invention

The epoxy resin curing agent of the present invention can provide an epoxy resin composition that has a long pot life and is suited for molding wind power generation blades by the Va-RTM process or the like. The wind power generation blades obtained by using the epoxy resin composition have high elasticity and excellent salt water resistance.

## Description of Embodiments

### [Epoxy resin curing agent]

An epoxy resin curing agent of the present invention comprises: a polyether polyamine (a1); an aliphatic polyamine having an alicyclic structure (a2); and an aliphatic polyamine having an aromatic ring (a3).

When the epoxy resin curing agent of the present invention is in the above configuration, it can provide an epoxy resin composition that has a long pot life and is suited for molding wind power generation blades having high elasticity and excellent salt water resistance by the Va-RTM process or the like.

Although it is not certain why the epoxy resin curing agent of the present invention achieves the above effects, it is inferred as follows.

The polyether polyamine (a1) (hereinafter, also referred to as "component (a1)") is a curing agent component that has low viscosity and can achieve a long pot life. On the other hand, the curing speed is slow and the cured product Tg of the resulting epoxy resin composition tends to be low, thus presenting production problems such as the difficulty of curing only under high temperature conditions.

The aliphatic polyamine having an alicyclic structure (a2) (hereinafter, also referred to as "component (a2)") is also a curing agent component that can achieve a long pot life. The component (a2) tends to have higher viscosity compared to the polyether polyamine (a1), but it improves the cured product Tg of the resulting epoxy resin composition and makes it easier to achieve high elasticity.

Furthermore, since the epoxy resin curing agent of the present invention comprises the aliphatic polyamine

having an aromatic ring (a3) (hereinafter, also referred to as "component (a3)"), it is considered that the excessive decrease in curing speed due to the component (a1) and the component (a2), which can achieve a long pot life, is suppressed and that the crystallizability-improving effect derived from the structure of the component (a3) could impart a salt water resistance-improving effect that could not be achieved by the component (a1) and the component (a2) alone.

<Component (a1): polyether polyamine>

The epoxy resin curing agent of the present invention comprises a polyether polyamine as the component (a1).

It is preferable that the polyether polyamine to be used in the present invention be a compound having a polyether structure and 2 or more amino groups containing at least 1 active hydrogen, from the viewpoint of demonstrating the function as an epoxy resin curing agent component. Note that the "amino group containing active hydrogen" refers to an amino group in which there is at least 1 hydrogen atom directly bonded to the nitrogen atom of the amino group.

Examples of the polyether polyamine include chain polyether polyamines and cyclic polyether polyamines. From the viewpoint of having low viscosity suited for molding by the Va-RTM process, availability, and economic efficiency, chain polyether polyamines are preferred as the component (a1).

It is more preferable that the component (a1) be a chain polyether diamine from the viewpoint of having low viscosity suited for molding by the Va-RTM process and from the viewpoint of achieving a long pot life. Still more preferably, the component (a1) is a polyoxyalkylenediamine represented by the following general formula (1):

$$H_2N-(R^1O)_n-R^2-NH_2 \qquad (1)$$

wherein $R^1$ is an alkylene group having 2 to 6 carbon atoms; n is the average repeating number of ($R^1O$) units and is a number greater than 1; multiple $R^1$ may all be the same or different; and $R^2$ is a divalent group having 2 to 12 carbon atoms.

$R^1$ in the formula (1) is an alkylene group having preferably 2 to 4 carbon atoms, and more preferably 2 to 3 carbon atoms. Specific examples of $R^1$ include an ethylene group, a propylene group, a trimethylene group, a tetramethylene group, a butylene group, an isobutylene group, a pentamethylene group, and a hexamethylene group, and it is preferably one or more selected from the group consisting of an ethylene group, a propylene group, a trimethylene group, a tetramethylene group, a butylene group, and an isobutylene group, more preferably one or more selected from the group consisting of an ethylene group, a propylene group, and a trimethylene group, still more preferably one or more selected from the group consisting of an ethylene group and a propylene group, and even more preferably a propylene group.

n in the formula (1) is the average repeating number of ($R^1O$) units, and from the viewpoint of having low viscosity suited for molding by the Va-RTM process and from the viewpoint of achieving a long pot life, it is preferably 1.5 to 100, more preferably 1.5 to 50, still more preferably 2 to 30, even more preferably 2 to 20, even more preferably 2 to 10, and even more preferably 2 to 6.

$R^2$ in the formula (1) is a divalent chain aliphatic group having preferably 2 to 12, more preferably 2 to 8, and still more preferably 2 to 4 carbon atoms. Specific examples of $R^2$ include an ethylene group, a propylene group, a trimethylene group, a tetramethylene group, a butylene group, an isobutylene group, a pentamethylene group, a hexamethylene group, a heptamethylene group, an octamethylene group, an ethylhexylene group, a nonamethylene group, a decamethylene group, an undecamethylene group, and a dodecamethylene group. Among the above, $R^2$ is preferably one or more selected from the group consisting of an ethylene group, a propylene group, a trimethylene group, a tetramethylene group, a butylene group, an isobutylene group, a pentamethylene group, a hexamethylene group, a heptamethylene group, an octamethylene group, and an ethylhexylene group, more preferably one or more selected from the group consisting of an ethylene group, a propylene group, a trimethylene group, a tetramethylene group, a butylene group, and an isobutylene group, still more preferably one or more selected from the group consisting of an ethylene group, a propylene group, and a trimethylene group, and even more preferably a propylene group.

From the viewpoint of having low viscosity suited for molding by the Va-RTM process and from the viewpoint of achieving a long pot life, the component (a1) is preferably one or more selected from the group consisting of a polyoxyethylenediamine, a polyoxypropylenediamine, and a polyoxyethylene-polyoxypropylenediamine, more preferably one or more selected from the group consisting of a polyoxypropylenediamine and a polyoxyethylene-polyoxypropylenediamine, and still more preferably a polyoxypropylenediamine.

From the viewpoint of having low viscosity suited for molding by the Va-RTM process and from the viewpoint of achieving a long pot life, the average repeating number of oxyalkylene units in the polyoxyethylenediamine, polyoxypropylenediamine, and polyoxyethylene-polyoxypropylenediamine is preferably 1.5 to 100, more preferably 1.5 to 50, still more preferably 2 to 30, even more preferably 2 to 20, even more preferably 2 to 10, and even more preferably 2 to 6.

The component (a1) is even more preferably a polyoxyalkylenediamine represented by the following general formula (1-1):

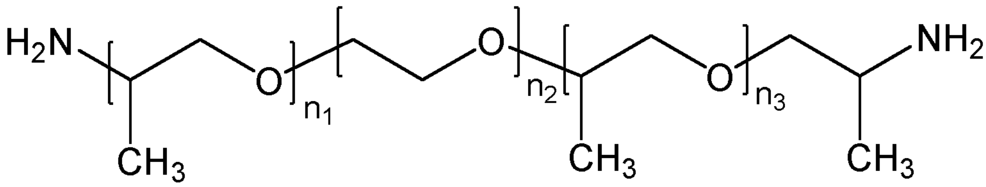

(1-1)

wherein $n_1$, $n_2$, and $n_3$ are average repeating numbers, $n_1 + n_3 > 1$, and $n_2 \geq 0$.

The sum of $n_1$, $n_2$, and $n_3$ ($n_1 + n_2 + n_3$) in the formula (1-1) is preferably 1.5 to 100, more preferably 1.5 to 50, still more preferably 2 to 30, even more preferably 2 to 20, even more preferably 2 to 10, and even more preferably 2 to 6.

$n_2$ in the formula (1-1) is preferably 0 to 50, more preferably 0 to 30, still more preferably 0 to 20, and even more preferably 0.

The component (a1) is even more preferably a polyoxypropylenediamine represented by the following general formula (1-2):

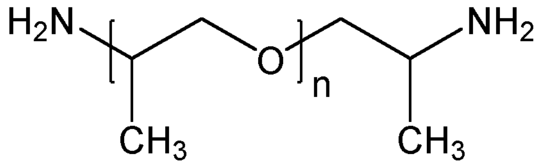

(1-2)

wherein n is the average repeating number and is a number greater than 1.

From the viewpoint of having low viscosity suited for molding by the Va-RTM process and from the viewpoint of achieving a long pot life, n in the formula (1-2) is preferably 1.5 to 100, more preferably 1.5 to 50, still more preferably 2 to 30, even more preferably 2 to 20, even more preferably 2 to 10, and even more preferably 2 to 6.

Commercially available polyether polyamines can also be used as the component (a1). Examples of the commercially available polyether polyamines include the JEFF AMINE D series (polyoxypropylenediamine, D-230, D-400, D-2000, and D-4000) and the JEFF AMINE ED series (ED-600, ED-900, and ED-2003) (all manufactured by Huntsman Corporation).

<Component (a2): aliphatic polyamine having alicyclic structure>

The epoxy resin curing agent of the present invention comprises an aliphatic polyamine having an alicyclic structure as the component (a2). From the viewpoint of achieving a long pot life, the component (a2) is an aliphatic polyamine that has an alicyclic structure and contains no aromatic ring.

The component (a2) only needs to have at least 1 alicyclic structure, and has preferably 1 to 3, more preferably 1 to 2, and from the viewpoint of low viscosity suited for molding by the Va-RTM process, even more preferably only 1 alicyclic structure.

Examples of the alicyclic structure in the component (a2) include a cycloalkane ring, a cycloalkene ring, a bicycloalkane ring, a bicycloalkene ring, and a tricycloalkane ring. Among the above, a cycloalkane ring is preferred, a cycloalkane ring having 5 to 8 carbon atoms is more preferred, and a cyclohexane ring is still more preferred.

From the viewpoint of achieving a long pot life and obtaining a cured product having high Tg and high elasticity, it is preferable that the component (a2) be an aliphatic polyamine having at least 1 amino group directly bonded to the alicyclic structure.

From the viewpoint of obtaining a cured product having high elasticity, it is preferable that the component (a2) be a diamine.

Specific examples of the component (a2) include isophoronediamine, menthenediamine, norbornanediamine, tricyclodecanediamine, adamantanediamine, 1,2-diaminocyclohexane, 1,3-diaminocyclohexane, 1,4-diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, 3,3'-dimethyl-4,4'-diaminodicyclohexylmethane (bis(4-amino-3-methylcyclohexyl)methane), 3,3',5,5'-tetramethyl-4,4'-diaminodicyclohexylmethane, and 4,4'-diaminodicyclohexylmethane, and one of them or two or more of them can be used.

Among the above, from the viewpoint of having low viscosity suited for molding by the Va-RTM process, from the viewpoint of achieving a long pot life, and from the viewpoint of obtaining a cured product having high Tg and high elasticity, the component (a2) is preferably one or more selected from the group consisting of isophoronediamine, menthenediamine, norbornanediamine, 1,2-diaminocyclohexane, 1,3-diaminocyclohexane, 1,4-diaminocyclohexane,

and 1,4-diamino-2-methylcyclohexane, more preferably one or more selected from the group consisting of isophoronediamine, menthenediamine, and norbornanediamine, and still more preferably isophoronediamine.

<Component (a3): aliphatic polyamine having aromatic ring>

The epoxy resin curing agent of the present invention comprises an aliphatic polyamine having an aromatic ring as the component (a3). Since the component (a3) has an aromatic ring, it can impart salt water resistance to the cured product of the resulting epoxy resin composition. In addition, since the component (a3) is an aliphatic polyamine that has no amino group directly bonded to the aromatic ring, it is easy to achieve low viscosity suited for molding by the Va-RTM process.

The component (a3) only needs to have at least 1 aromatic ring, and has preferably 1 to 3, more preferably 1 to 2, and from the viewpoint of low viscosity suited for molding by the Va-RTM process, even more preferably only 1 aromatic ring.

It is preferable that the component (a3) be a diamine from the viewpoint of having low viscosity suited for molding by the Va-RTM process. More preferably, the component (a2) is a diamine represented by the following general formula (2):

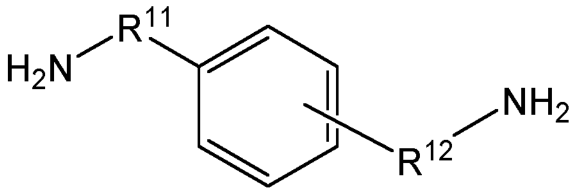

(2)

wherein $R^{11}$ and $R^{12}$ are each independently an alkylene group having 1 to 6 carbon atoms.

$R^{11}$ and $R^{12}$ in the formula (2) are each independently an alkylene group having preferably 1 to 4 carbon atoms, and more preferably 1 to 3 carbon atoms. Specific examples of $R^{11}$ and $R^{12}$ include a methylene group, an ethylene group, a propylene group, a trimethylene group, a tetramethylene group, a butylene group, an isobutylene group, a pentamethylene group, and a hexamethylene group, and they are preferably one or more selected from the group consisting of an ethylene group, a trimethylene group, and a tetramethylene group, more preferably one or more selected from the group consisting of a methylene group, an ethylene group, and a trimethylene group, and still more preferably a methylene group.

Specific examples of the component (a3) include ortho-xylylenediamine, meta-xylylenediamine (MXDA), and para-xylylenediamine (PXDA), 1,2-bis(aminoethyl)benzene, 1,3-bis(aminoethyl)benzene, 1,4-bis(aminoethyl)benzene, 1,2-bis(aminopropyl)benzene, 1,3-bis(aminopropyl)benzene, and 1,4-bis(aminopropyl)benzene, and one of them or two or more of them can be used.

Among the above, from the viewpoint of improvement in salt water resistance of the cured product of the resulting epoxy resin composition, xylylenediamine is preferred as the component (a3). Among xylylenediamines, from the viewpoint of improvement in salt water resistance of the cured product of the resulting epoxy resin composition, one or more selected from the group consisting of meta-xylylenediamine and para-xylylenediamine is preferred, and from the viewpoint of low viscosity suited for molding by the Va-RTM process, meta-xylylenediamine alone or a mixture of meta-xylylenediamine and para-xylylenediamine is more preferred, and meta-xylylenediamine is still more preferred.

When the component (a3) is a mixture of meta-xylylenediamine and para-xylylenediamine, the mass ratio between meta-xylylenediamine and para-xylylenediamine is preferably 99/1 to 50/50, more preferably 99/1 to 60/40, and still more preferably 99/1 to 75/25 from the viewpoint of low viscosity and from the viewpoint of improvement in salt water resistance.

Note that the polyamines for the components (a1) to (a3) can also be used at least partially modified. Examples of modified products of the polyamines for the components (a1) to (a3) include Mannich modified products, epoxy modified products, Michael adducts, Michael adduct polycondensates, styrene modified products, and polyamide modified products of the polyamines.

<Content>

From the viewpoint of providing an epoxy resin composition that has a long pot life and is suited for molding wind power generation blades having high elasticity and excellent salt water resistance by the Va-RTM process or the like, the contents of the components (a1) to (a3) in the epoxy resin curing agent of the present invention are preferably as described below.

The content of the component (a1) in the epoxy resin curing agent is preferably 60 to 90% by mass, more preferably 65 to 85% by mass, and still more preferably 65 to 75% by mass.

The content of the component (a2) in the epoxy resin curing agent is preferably 2 to 30% by mass, more preferably 5 to 25% by mass, and still more preferably 10 to 25% by mass.

The content of the component (a3) in the epoxy resin curing agent is preferably 1 to 25% by mass, more preferably 5 to 20% by mass, and still more preferably 5 to 15% by mass.

In addition, a preferred combination of the contents of the components (a1) to (a3) in the epoxy resin curing agent is a content of the component (a1) of 60 to 90% by mass and a total content of the component (a2) and the component (a3) of 10 to 40% by mass, a more preferred combination is a content of the component (a1) of 65 to 85% by mass and a total content of the component (a2) and the component (a3) of 15 to 35% by mass, and a still more preferred combination is a content of the component (a1) of 65 to 75% by mass and a total content of the component (a2) and the component (a3) of 25 to 35% by mass.

The total content of the components (a1) to (a3) in the epoxy resin curing agent is preferably 70% by mass or more, more preferably 80% by mass or more, and still more preferably 90% by mass or more, and is also 100% by mass or less.

From the viewpoint of improvement in salt water resistance of the cured product of the resulting epoxy resin composition, the proportion of the content of the component (a3) to the total content of the component (a2) and the component (a3) in the epoxy resin curing agent is preferably 0.15 to 0.70, more preferably 0.20 to 0.55, and still more preferably 0.25 to 0.45 as the mass ratio [(a3)/{(a2) + (a3)}].

<Other components>

The epoxy resin curing agent of the present invention may comprise a known curing agent other than the components (a1) to (a3).

Among the above, examples of the curing agent other than the components (a1) to (a3) include polyamine compounds having 2 or more amino groups in the molecule and modified products thereof, other than the components (a1) to (a3). Examples of such polyamine compounds include: chain aliphatic polyamine compounds such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; aromatic polyamine compounds such as phenylenediamine, diaminodiphenylmethane, diaminodiphenylsulfone, and diethyltoluenediamine; and polyamine compounds having a heterocyclic structure, such as N-aminoethylpiperazine and N,N'-bis(aminoethyl)piperazine. In addition, examples of modified products of such polyamine compounds include Mannich modified products, epoxy modified products, Michael adducts, Michael adduct polycondensates, styrene modified products, and polyamide modified products of the above compounds. One of them may be used alone, or two or more of them may be used in combination.

From the viewpoint of efficiently expressing the effects of the present invention, in the case where the epoxy resin curing agent of the present invention comprises a curing agent other than the components (a1) to (a3), the content thereof is preferably 30% by mass or less, more preferably 20% by mass or less, still more preferably 10% by mass or less, even more preferably 5% by mass or less, and even more preferably 1% by mass or less, with respect to the entire amount of the epoxy resin curing agent of the present invention. In addition, the lower limit is 0% by mass.

[Epoxy resin composition]

An epoxy resin composition of the present invention comprises an epoxy resin and the epoxy resin curing agent of the present invention described above. In the present specification, "epoxy resin" means a component to be used as the main agent in the epoxy resin composition.

<Epoxy resin>

Any epoxy resin can be used as long as it is an epoxy resin having a glycidyl group that can react with active hydrogen in the epoxy resin curing agent of the present invention. From the viewpoint of obtaining a cured product having high elasticity, it is preferably an epoxy resin containing an aromatic ring or an alicyclic structure in the molecule.

The epoxy resin containing an aromatic ring in the molecule only needs to be a resin that contains at least 1 aromatic ring and at least 2 epoxy groups. The above-described aromatic ring may be a monocyclic ring or a fused ring, and examples thereof include, but are not limited to, a benzene ring, a naphthalene ring, an anthracene ring, and a tetracene ring. Among the above, a benzene ring and a naphthalene ring are preferred, and a benzene ring is more preferred.

Examples of preferred epoxy resins containing an aromatic ring in the molecule include bisphenol epoxy resins

such as a bisphenol A epoxy resin, a bisphenol E epoxy resin, and a bisphenol F epoxy resin; biphenol epoxy resins; phenol novolac epoxy resins; and resorcinol epoxy resins.

Among the above, one or more selected from the group consisting of bisphenol epoxy resins and biphenol epoxy resins are more preferred, and from the viewpoint of obtaining a cured product having high elasticity, an epoxy resin represented by the following general formula (3) is more preferred:

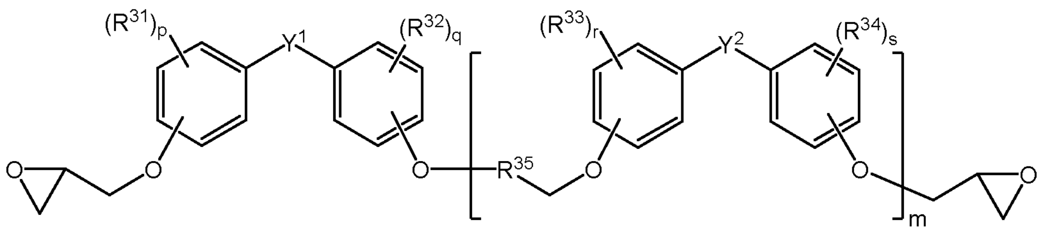

(3)

wherein $R^{31}$ to $R^{34}$ are each independently an alkyl group having 1 to 6 carbon atoms, and p, q, r, and s are each independently an integer of 0 to 4; multiple $R^{31}$, multiple $R^{32}$, multiple $R^{33}$, and multiple $R^{34}$ may all be the same or different from each other; $Y^1$ and $Y^2$ are each independently a single bond, $-CH_2-$, $-CH(CH_3)-$, or $-C(CH_3)_2-$; $R^{35}$ is $-CH_2CH(OH)-$ or - $CH(OH)CH_2-$; and m represents the average number of repeating units and is a number of 0 to 2.0.

$R^{31}$ to $R^{34}$ are preferably an alkyl group having 1 to 4 carbon atoms, and more preferably one or more selected from the group consisting of a methyl group, an ethyl group, an isopropyl group, and a t-butyl group.

p, q, r, and s are all preferably an integer of 0 to 2, more preferably 0 or 1, and still more preferably all 0.

$Y^1$ and $Y^2$ are preferably $-CH_2-$ or $-C(CH_3)_2-$, and more preferably $-C(CH_3)_2-$.

In addition, from the viewpoint of obtaining a cured product having high elasticity, m is preferably 0 to 1.0, more preferably 0.01 to 0.5, still more preferably 0.01 to 0.2, and even more preferably 0.01 to 0.15.

Among the above, a bisphenol A epoxy resin represented by the following formula (3-1) is more preferred:

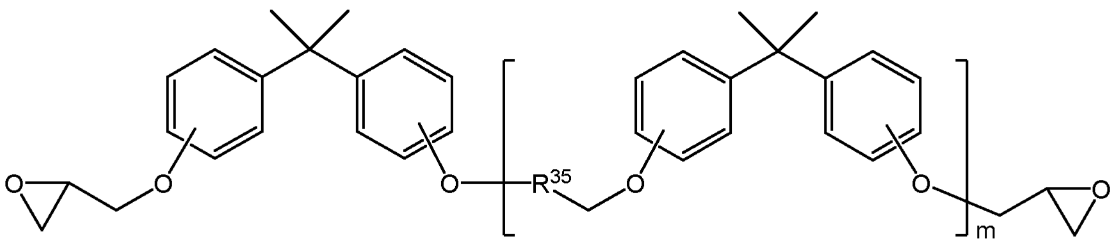

(3-1)

wherein $R^{35}$ and m are as defined above.

One epoxy resin may be used alone, or two or more of them may be used in combination.

From the viewpoint of obtaining an epoxy resin composition having low viscosity suited for molding by the Va-RTM process and from the viewpoint of improvement in workability, the epoxy resin may further contain a reactive diluent.

Examples of the reactive diluent include low molecular weight compounds having at least 1 epoxy group, and include aromatic monoglycidyl ethers such as phenyl glycidyl ether and cresyl glycidyl ether; alkyl monoglycidyl ethers such as butyl glycidyl ether, hexyl glycidyl ether, octyl glycidyl ether, decyl glycidyl ether, lauryl glycidyl ether, and tetradecyl glycidyl ether; and diglycidyl ethers of aliphatic diols, such as 1,3-propanediol diglycidyl ether, 1,4-butanediol diglycidyl ether, neopentyl glycol diglycidyl ether, and 1,6-hexanediol diglycidyl ether.

One of the above-described reactive diluents may be used alone, or two or more of them may be used in combination.

From the viewpoint of low viscosity of the epoxy resin composition and suppressing excessive decrease in curing speed, the epoxy equivalent of the epoxy resin is preferably 400 g/equivalent or less, more preferably 300 g/equivalent or less, still more preferably 250 g/equivalent or less, and even more preferably 220 g/equivalent or less. The lower limit is not particularly limited, but in the case where the epoxy resin contains a bisphenol A epoxy resin represented by the above formula (3-1), it is preferably 170 g/equivalent or more.

From the viewpoint of obtaining an epoxy resin composition having low viscosity suited for molding by the Va-RTM process, the viscosity of the epoxy resin at a temperature of 30°C is preferably 20,000 mPa·s or less, more preferably 15,000 mPa·s or less, still more preferably 10,000 mPa·s or less, even more preferably 5,000 mPa·s or less, even more preferably 3,000 mPa·s or less, even more preferably 2,000 mPa·s or less, and even more preferably 1,500 mPa·s or less. There is no particular restriction on the lower limit value of the viscosity of the epoxy resin at a temperature of 30°C, but it is usually 5 mPa·s or more.

The viscosity of the epoxy resin can be measured using an E-type viscometer, specifically by the method described in Examples.

<Other components>

The epoxy resin composition of the present invention may further comprise a modifying component such as a filler and a plasticizer, a component for adjusting flowability such as a thixotropic agent, and other components such as a pigment, a leveling agent, a tackifier, and elastomer fine particles, depending on the application.

<Content>

The ratio between the contents of the epoxy resin and the epoxy resin curing agent in the epoxy resin composition of the present invention is in such an amount that the ratio of the number of active hydrogen in the epoxy resin curing agent to the number of epoxy groups in the epoxy resin (the number of active hydrogen in the epoxy resin curing agent/the number of epoxy groups in the epoxy resin) is preferably 1/0.5 to 1/2, more preferably 1/0.75 to 1/1.5, and still more preferably 1/0.8 to 1/1.2. Such a ratio only needs to be in the above-described range in the end, and may be constant during the molding of the epoxy resin composition, or may be varied during the molding.

From the viewpoint of obtaining the effects of the present invention, the total content of the epoxy resin and the epoxy resin curing agent in the epoxy resin composition is preferably 50% by mass or more, more preferably 70% by mass or more, still more preferably 80% by mass or more, and even more preferably 90% by mass or more, and is also 100% by mass or less.

Furthermore, from the viewpoint of low viscosity suited for molding by the Va-RTM process and from the viewpoint of achieving a long pot life, it is preferable that the content of the epoxy resin be 65 to 85% by mass and the content of the epoxy resin curing agent be 15 to 35% by mass in the epoxy resin composition, and the total content of the epoxy resin and the epoxy resin curing agent in the epoxy resin composition be 80 to 100% by mass. More preferably, the content of the epoxy resin is 70 to 80% by mass and the content of the epoxy resin curing agent is 20 to 30% by mass in the epoxy resin composition, and the total content of the epoxy resin and the epoxy resin curing agent in the epoxy resin composition is 80 to 100% by mass.

<Viscosity>

From the viewpoint of low viscosity suited for molding by the Va-RTM process, the viscosity of the epoxy resin composition of the present invention at a temperature of 30°C is preferably 5,000 mPa·s or less, more preferably 3,000 mPa·s or less, still more preferably 2,000 mPa·s or less, even more preferably 1,000 mPa·s or less, even more preferably 800 mPa·s or less, and even more preferably 600 mPa·s or less. There is no particular restriction on the lower limit value of the viscosity of the epoxy resin composition at a temperature of 30°C, but it is usually 5 mPa·s or more.

The viscosity of the epoxy resin composition can be measured using an E-type viscometer in the same manner as for the viscosity of the epoxy resin, specifically by the method described in Examples.

<Pot life>

The epoxy resin composition of the present invention has a long pot life. Specifically, the time for the viscosity to reach 0.3 Pa·s at a temperature of 50°C is preferably 2500 seconds or longer, more preferably 3000 seconds or longer, and still more preferably 3200 seconds or longer.

The pot life of the epoxy resin composition can be measured specifically by the method described in Examples.

<Method for preparing epoxy resin composition>

There is no particular restriction on the method for preparing the epoxy resin composition, and the composition can be prepared by mixing the epoxy resin curing agent, the epoxy resin, and other components as necessary by a known method using a known apparatus. There is no particular restriction on the order of mixing the components to be contained in the epoxy resin composition, either. The epoxy resin curing agent may be prepared and then mixed with the epoxy resin, or the components (a1) to (a3) and other components, which constitute the epoxy resin curing agent, may be mixed with the epoxy resin simultaneously to prepare the epoxy resin composition.

From the viewpoint of avoiding progress of gelation before use, it is preferable that the components to be contained in the epoxy resin composition be brought into contact with each other and mixed immediately before use. The temperature at which the components to be contained in the epoxy resin composition are mixed can be adjusted as appropriate depending on the viscosity of the epoxy resin. From the viewpoint of suppressing increase in viscosity,

it is preferably 120°C or lower, and more preferably 100°C or lower, and from the viewpoint of compatibility of the epoxy resin, it is preferably 30°C or higher, and more preferably 50°C or higher. The time of mixing is in the range of preferably 0.1 to 15 minutes, more preferably 0.2 to 10 minutes, and still more preferably 0.5 to 5 minutes.

[Cured product]

The cured product of the epoxy resin composition of the present invention (hereinafter, also simply referred to as "cured product of the present invention") is prepared by curing the epoxy resin composition of the present invention described above by a known method. Conditions for curing the epoxy resin composition are selected as appropriate depending on the application and form, and are not particularly limited.

The form of the cured product of the present invention is not particularly limited either, and can be selected depending on the application. For example, in the case where the application of the epoxy resin composition is a coating material, the cured product of such a composition is usually in the form of a film. Note that, from the viewpoint of effectively demonstrating the effects of the present invention, it is preferable that the cured product of the present invention be a matrix resin for the fiber-reinforced composite material described later.

[Fiber-reinforced composite material]

A fiber-reinforced composite material (FRP, hereinafter also referred to as "composite material") of the present invention is comprises the cured product of the epoxy resin composition described above and a reinforcing fiber. Such a fiber-reinforced composite material can be obtained by impregnating a reinforcing fiber with the epoxy resin composition described above and then curing such a composition.

<Reinforcing fiber>

Examples of the reinforcing fiber include glass fiber, carbon fiber, aramid fiber, boron fiber, and metal fiber. One reinforcing fiber may be used alone, or two or more of them may be used in combination. Among the above, from the viewpoint of using the resulting composite material for wind power generation blades, it is preferable that the reinforcing fiber be one or more selected from the group consisting of glass fiber and carbon fiber.

The carbon fiber may be those produced by using rayon or polyacrylonitrile (PAN) as a starting material, or may be those produced by spinning petroleum or coal pitch as a starting material. In addition, recycled products prepared by reusing mill ends of carbon fiber and recycled carbon fiber prepared by removing resin from carbon fiber-reinforced composite materials (CFRP) can also be used.

Examples of the form of the reinforcing fiber include short fiber and continuous fiber, but from the viewpoint of impregnating it with the epoxy resin composition and from the viewpoint of molding the composite material by the Va-RTM process, it is preferably continuous fiber. It is also possible to use continuous fiber and short fiber in combination.

Examples of the continuous fiber include those in which monofilaments or multifilaments are simply arranged in one direction or alternately crossed, and those with various forms such as fabrics including knitted and woven fabrics, non-woven fabrics, or mats. Among the above, the form of monofilament, fabric, non-woven fabric, or mat is preferred, and the form of fabric is more preferred.

The number of filaments in the continuous fiber is usually in the range of 500 to 100,000, preferably 5,000 to 80,000, and more preferably 10,000 to 70,000.

The continuous fiber has a fineness of preferably 20 to 4,500 tex, and more preferably 50 to 4,000 tex. When the fineness is in this range, impregnation with the resin component is easy and it is easy to obtain a composite material with high elasticity. Note that the fineness can be determined by measuring the weight of continuous fiber having an arbitrary length and converting it into the weight per 1,000 m.

The reinforcing fiber has an average fiber diameter of preferably 1 to 100 $\mu$m, more preferably 3 to 50 $\mu$m, and further preferably 4 to 20 $\mu$m. When the average fiber diameter is in this range, processing is easy and it is easy to obtain a composite material with high elasticity.

Note that the average fiber diameter of the reinforcing fiber is determined by randomly sampling 50 or more fibers using a scanning electron microscope (SEM) or the like, observing and measuring them, and then calculating the number average.

The fiber-reinforced composite material may further comprise a foaming material in addition to the cured product of the epoxy resin composition described above and the reinforcing fiber. There is no particular restriction on the foaming material, but examples thereof include foaming materials constituted by resin materials such as a polyvinyl chloride resin, a polyurethane resin, a polystyrene resin, a polyolefin resin, an acrylic resin, a phenolic resin, a polymethacrylimide resin, and an epoxy resin.

From the viewpoint of making the composite material with high elasticity, the fiber volume content (Vf) of the

fiber-reinforced composite material is preferably 20% or more, more preferably 30% or more, and still more preferably 35% or more. In addition, from the viewpoint of moldability, processability, and light weight of the composite material, it is preferably 90% or less, more preferably 80% or less, still more preferably 70% or less, and even more preferably 60% or less.

The fiber volume content of the fiber-reinforced composite material is determined specifically by the method described in Examples.

<Application>

The epoxy resin composition and fiber-reinforced composite material of the present invention can be suitably used for wind power generation blades. Besides, examples of the application of the fiber-reinforced composite material of the present invention include automotive structural materials and building materials.

<Method for producing fiber-reinforced composite material>

Although there is no particular restriction on the method for producing the fiber-reinforced composite material of the present invention, from the viewpoint of avoiding curing of the epoxy resin composition during the production process, it is preferable that the epoxy resin curing agent and the epoxy resin be mixed immediately before molding and then impregnation of the reinforcing fiber and curing be performed.

In particular, from the viewpoint of producing a wind power generation blade made of the fiber-reinforced composite material, it is preferable that the method have a step of molding such a fiber-reinforced composite material and wind power generation blade by the Va-RTM process. By using the epoxy resin curing agent and epoxy resin composition of the present invention, which have a long pot life, to produce the composite material by the Va-RTM process, wind power generation blades can be produced with good productivity.

Production of the composite material by the Va-RTM process can be carried out by, for example, the following procedures.

At first, the reinforcing fiber is placed in a pair of upper and lower molds, the molds are sealed, and the pressure in the mold is reduced. Next, the epoxy resin, which is the main agent of the epoxy resin composition, and the epoxy resin curing agent are filled into separate tanks and pumped into a mixer for mixing. The epoxy resin composition prepared as described above is injected into the mold to impregnate the reinforcing fiber, and then the epoxy resin is cured.

In the above step, the temperature at which the epoxy resin composition is injected into the mold or the reinforcing fiber is impregnated therewith is preferably 30 to 120°C, and more preferably 50 to 100°C. In the case where the epoxy resin curing agent and the epoxy resin are supplied from separate tanks and mixed immediately before molding, the temperatures of the epoxy resin curing agent and the epoxy resin at the time of mixing can be individually set as well.

The temperature of the epoxy resin curing agent at the time of mixing is preferably 5 to 30°C, and more preferably 10 to 25°C from the viewpoint of suppressing increase in viscosity. Also, the temperature of the epoxy resin at the time of mixing can be adjusted as appropriate depending on the viscosity of the epoxy resin, but it is preferably 30 to 120°C, and more preferably 50 to 100°C. The temperature described above may be constant during the molding, or may be varied during the molding.

Although the time of impregnating the reinforcing fiber with the epoxy resin composition varies depending on the shape of the fiber-reinforced composite material, from the viewpoint of moldability and productivity, it is preferably 10 to 120 minutes, and more preferably 10 to 60 minutes.

The temperature for curing the epoxy resin composition is preferably 50 to 200°C, more preferably 50 to 150°C, and still more preferably 50 to 120°C. The temperature of curing may be constant during the molding, or may be varied during the molding. When the temperature of curing is 50°C or higher, curing of the epoxy resin progresses sufficiently, and when the temperature is 200°C or lower, the cost for adjusting the temperature of the mold is low. The time of curing the epoxy resin composition can be selected as appropriate depending on the temperature of curing and the like, but from the viewpoint of moldability and productivity, it is preferably 0.5 to 24 hours, and more preferably 1 to 18 hours.

[Wind power generation blade]

The present invention also provides a wind power generation blade that comprises the fiber-reinforced composite material described above. Such a wind power generation blade is at least partially constituted by the fiber-reinforced composite material comprising the cured product of the epoxy resin composition and the reinforcing fiber described above, and thus has high elasticity and excellent salt water resistance.

In the case where part of a wind power generation blade is constituted by the fiber-reinforced composite material of the present invention, from the viewpoint of demonstrating salt water resistance, it is preferable that it be in an aspect where at least the outer surface of the wind power generation blade is constituted by the fiber-reinforced composite

material. Note that the wind power generation blade may be made solely of the fiber-reinforced composite material of the present invention.

The wind power generation blade of the present invention can be molded using, for example, the Va-RTM process already described in the method for producing the fiber-reinforced composite material.

The wind power generation blade may be integrally molded. Alternatively, the wind power generation blade can also be produced by molding two or more members made of the fiber-reinforced composite material, and then pasting such members together using an adhesive or the like.

Examples

Hereinafter, the present invention will be described in detail with reference to Examples and Comparative Examples, but the present invention is not limited the following Examples. Note that the following methods were used for the measurement and evaluation.

(Viscosity)

The viscosity of the main agent epoxy resin and the epoxy resin composition was measured at 30°C using an E-type viscometer "TVE-22H Model Viscometer, cone-plate type" (manufactured by Toki Sangyo Co., Ltd.).

(Pot life evaluation)

The pot life of the epoxy resin composition was evaluated by the following method.

The viscosity of the epoxy resin composition was measured at 50°C using a rheometer (manufactured by TA Instruments Inc.). The measured values were taken every 10 seconds, and the time it took for the viscosity to reach 0.3 Pa·s is shown in the table. A longer time to reach 0.3 Pa·s indicates a longer pot life.

(Fiber volume content in fiber-reinforced composite material)

The fiber volume content (Vf (%)) in the fiber-reinforced composite material was calculated according to the following calculation formula.

Vf (%) = {Mass of reinforcing fiber (g) / Specific gravity of reinforcing fiber} ÷ [{Mass of reinforcing fiber (g) / Specific gravity of reinforcing fiber} + {Mass of solid content of impregnating epoxy resin composition (g)/ Specific gravity of solid content of epoxy resin composition}] × 100

(Bending strength and bending elastic modulus of fiber-reinforced composite material)

The fiber-reinforced composite material obtained in each of the Examples described below was subjected to a machining process to fabricate a test piece of 80 mm × 15 mm × 2 mm thick, which was used for the measurement.

Using an autograph (manufactured by Shimadzu Corporation), a bending test was carried out in accordance with ISO 178 under the conditions of room temperature (23°C) and a test speed of 5 mm/minute, and the bending strength and bending elastic modulus were measured.

(Bending strength retention rate after salt water spray test)

The test piece of the fiber-reinforced composite material used for the measurement of bending strength was placed in a salt water spray tester ("STP-90" manufactured by Suga Test Instruments Co., Ltd., tank temperature 35°C) and was continuously sprayed with salt water (concentration 5 mass%) for one month. Next, the test piece was dried at 60°C for 15 hours, and then the bending strength was measured by the same method as described above. The bending strength before the salt water spray test was defined as A (MPa), the bending strength after the salt water spray test was defined as B (MPa), and the bending strength retention rate was calculated according to the following expression. A higher bending strength retention rate means superior salt water resistance.

$$\text{Bending strength retention rate after salt water spray test (\%)} = B/A \times 100$$

Examples 1 to 5 and Comparative Examples 1 to 3

(Preparation of epoxy resin curing agent and epoxy resin composition)

The component (a1), polyoxypropylenediamine ("JEFFAMINE D-230", manufactured by Huntsman Corporation), the component (a2), isophoronediamine (IPDA, manufactured by EVONIK Industries AG), and the component (a3), meta-xylylenediamine (MXDA, manufactured by Mitsubishi Gas Chemical Company, Inc.) were compounded and mixed in the proportions shown in the table to obtain the epoxy resin curing agent.

Furthermore, this epoxy resin curing agent and the main agent, liquid bisphenol A epoxy resin "jER811" (manufactured by Mitsubishi Chemical Corporation), were compounded and mixed such that the ratio of the number of active hydrogen in the epoxy resin curing agent to the number of epoxy groups in the main agent epoxy resin (the number of active hydrogen in the epoxy resin curing agent/the number of epoxy groups in the epoxy resin) was 1/1, thereby preparing the epoxy resin composition.

(Fabrication of fiber-reinforced composite material)

The prepared epoxy resin composition was used to impregnate 16 cm × 16 cm plain woven glass cloth (roving cloth "ERW320-554A", manufactured by Central Glass Co., Ltd., 0.3 mm thick) by Va-RTM molding at room temperature, thereby fabricating a prepreg. Next, such a prepreg was held in a hot air dryer at 60°C for 15 hours to thermally cure the epoxy resin composition, thereby fabricating a glass fiber-reinforced composite material with a thickness of 2 mm. The glass fiber volume content Vf in the composite material is as described in the table.

The epoxy resin compositions and composite materials obtained by the above methods were evaluated by the methods described above. The results are shown in Table 1.

Note that the amount of each component compounded, described in the table, is the amount of active component in each case.

Also, in the present Examples, when the epoxy resin composition has a pot life of 3200 seconds or longer and the bending strength retention rate after the salt water spray test of the fiber-reinforced composite material is 92% or more, it is considered that the long pot life and salt water resistance are both achieved.

Table 1

| | | | | Comparative Example | Example | Example | Example | Example | Comparative Example | Comparative Example | Example |
|---|---|---|---|---|---|---|---|---|---|---|---|
| | | | | 1 | 1 | 2 | 3 | 4 | 2 | 3 | 5 |
| Epoxy resin composition | Main agent epoxy resin | Type | | jER811 | jER811 | jER811 | jER811 | jER811 | jER811 | jER811 | jER811 |
| | | Epoxy equivalent (g/ equivalent) | | 186 | 186 | 186 | 186 | 186 | 186 | 186 | 186 |
| | | Viscosity / mPa.s (30°C) | | 1100 | 1100 | 1100 | 1100 | 1100 | 1100 | 1100 | 1100 |
| | | Amount compounded (g) | | 77.7 | 78.0 | 78.2 | 78.5 | 78.7 | 79.2 | 76.3 | 76.6 |
| | Curing agent | Composition (% by mass) | (a1) JEFFAMINE D-230 | 70 | 70 | 70 | 70 | 70 | 70 | 90 | 90 |
| | | | (a2)IPDA | 30 | 25 | 20 | 15 | 10 | 0 | 10 | 5 |
| | | | (a3)MXDA | 0 | 5 | 10 | 15 | 20 | 30 | 0 | 5 |
| | | Mass ratio [(a3)/{(a2) + (a3)}] | | 0 | 0.17 | 0.33 | 0.5 | 0.67 | 1 | 0 | 0.5 |
| | | Amount compounded (g) | | 22.3 | 22.0 | 21.8 | 21.5 | 21.3 | 20.8 | 237 | 23.4 |
| | Number of active hydrogen in curing agent/ Number of epoxy groups in epoxy resin | | | 1/1 | 1/1 | 1/1 | 1/1 | 1/1 | 1/1 | 1/1 | 1/1 |
| | Epoxy resin composition viscosity / mPa·s (30°C) | | | 530 | - | - | - | - | 430 | - | - |
| | Total content of main agent epoxy resin + curing agent (% by mass) | | | 100 | 100 | 100 | 100 | 100 | 100 | 100 | 100 |
| Evaluation results | Pot life | Time to reach 0.3 Pa·s (sec) (50°C) | | 3348 | 3324 | 3450 | 3318 | 3270 | 3072 | 4020 | 4152 |
| Composite material | Reinforcing fiber | Type | | GF | GF | GF | GF | GF | GF | GF | GF |
| | Fiber volume content Vf (%) | | | 39 | 39 | 39 | 39 | 39 | 39 | 39 | 39 |

(continued)

| | | Comparative Example | Example | Example | Example | Example | Comparative Example | Comparative Example | Example |
|---|---|---|---|---|---|---|---|---|---|
| | | 1 | 1 | 2 | 3 | 4 | 2 | 3 | 5 |
| Evaluation results | Bending strength (MPa) | 392 | 435 | 428 | 398 | 397 | 402 | 452 | 422 |
| | Bending elastic modulus (GPa) | 14 | 15 | 15 | 16 | 15 | 16 | 17 | 16 |
| | Bending strength retention rate after salt water spray test (%) | 87.1 | 93.7 | 97.9 | 97.2 | 95.3 | 98.5 | 90.3 | 94.2 |

The components used in the table are as follows.

<Main agent epoxy resin>

· jER811: liquid bisphenol A epoxy resin "jER811", manufactured by Mitsubishi Chemical Corporation, epoxy equivalent: 186 g/equivalent, viscosity at 30°C: 1100 mPa·s

<Epoxy resin curing agent component>

· (a1) JEFF AMINE D-230: polyoxypropylenediamine "JEFFAMINE D-230" represented by the following general formula, manufactured by Huntsman Corporation, n = 2.5 in the general formula

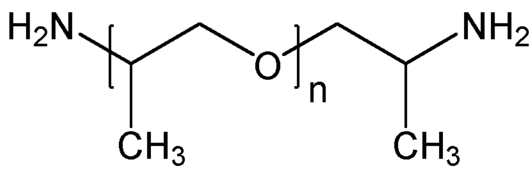

· (a2) IPDA: isophoronediamine, manufactured by EVONIK Industries AG
· (a3) MXDA: meta-xylylenediamine, manufactured by Mitsubishi Gas Chemical Company, Inc.

<Reinforcing fiber>

· GF: plain woven glass cloth, roving cloth "ERW320-554A", manufactured by Central Glass Co., Ltd., unit weight: 320 g/$m^2$, silane-treated, 0.3 mm thick

From Table 1, it can be seen that the epoxy resin compositions containing the epoxy resin curing agents according to the present invention have a long pot life. In addition, the fiber-reinforced composite materials using the cured products of such epoxy resin compositions as the matrix resin have high elasticity and excellent salt water resistance in comparison with Comparative Example 1.
In contrast, in the present Comparative Examples, either the pot life of the epoxy resin composition or the salt water resistance of the fiber-reinforced composite material using the cured product of the epoxy resin composition as the matrix resin were inferior.

Industrial Applicability

The epoxy resin curing agent of the present invention can provide an epoxy resin composition that has a long pot life and is suited for molding wind power generation blades by the Va-RTM process or the like. The wind power generation blades obtained by using the epoxy resin composition have high elasticity and excellent salt water resistance.

## Claims

1. An epoxy resin curing agent comprising: a component (a1), which is a polyether polyamine; a component (a2), which is an aliphatic polyamine having an alicyclic structure; and a component (a3), which is an aliphatic polyamine having an aromatic ring.

2. The epoxy resin curing agent according to claim 1, wherein the component (a1) is a polyoxypropylenediamine.

3. The epoxy resin curing agent according to claim 1 or 2, wherein the component (a2) is isophoronediamine.

4. The epoxy resin curing agent according to any one of claims 1 to 3, wherein the component (a3) is xylylenediamine.

5. The epoxy resin curing agent according to any one of claims 1 to 4, wherein a content of the component (a1) is 60 to 90% by mass and a total content of the component (a2) and the component (a3) is 10 to 40% by mass in the epoxy resin curing agent.

6. The epoxy resin curing agent according to any one of claims 1 to 5, wherein a proportion of a content of the component (a3) to a total content of the component (a2) and the component (a3) in the epoxy resin curing agent is 0.15 to 0.70 as a mass ratio [(a3)/{(a2) + (a3)}].

7. An epoxy resin composition comprising an epoxy resin and the epoxy resin curing agent according to any one of claims 1 to 6.

8. The epoxy resin composition according to claim 7, wherein a content of the epoxy resin is 65 to 85% by mass and a content of the epoxy resin curing agent is 15 to 35% by mass in the epoxy resin composition, and a total content of the epoxy resin and the epoxy resin curing agent in the epoxy resin composition is 80 to 100% by mass.

9. A cured product of the epoxy resin composition according to claim 7 or 8.

10. A fiber-reinforced composite material comprising the cured product of the epoxy resin composition according to claim 9 and a reinforcing fiber.

11. The fiber-reinforced composite material according to claim 10, wherein the reinforcing fiber is one or more selected from the group consisting of glass fiber and carbon fiber.

12. A wind power generation blade comprising the fiber-reinforced composite material according to claim 10 or 11.

**INTERNATIONAL SEARCH REPORT**

International application No. **PCT/JP2022/022131**

**A. CLASSIFICATION OF SUBJECT MATTER**

***C08G 59/56***(2006.01)i; ***C08J 5/24***(2006.01)i
FI: C08G59/56; C08J5/24 CFC

According to International Patent Classification (IPC) or to both national classification and IPC

**B. FIELDS SEARCHED**

Minimum documentation searched (classification system followed by classification symbols)

C08G59/56; C08J5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-219115 A (MITSUBISHI GAS CHEMICAL CO INC) 12 November 2012 (2012-11-12) claims, paragraphs [0008], [0014], [0017]-[0019], [0022], [0024], [0026], [0029]-[0055] | 1-12 |
| X | JP 2015-511264 A (BASF SE) 16 April 2015 (2015-04-16) claims, paragraphs [0001], [0012], [0046]-[0056], [0071]-[0075], [0078]-[0090] | 1-12 |
| A | JP 2014-118576 A (AIR PRODUCTS AND CHEMICALS INC) 30 June 2014 (2014-06-30) entire text | 1-12 |
| A | JP 2017-115134 A (EVONIK DEGUSSA GMBH) 29 June 2017 (2017-06-29) entire text | 1-12 |
| A | JP 2016-503114 A (SIKA TECHNOLOGY AG) 01 February 2016 (2016-02-01) entire text | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 August 2022** | **16 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/022131**

| Patent document cited in search report | Publication date (day/month/year) | Patent family member(s) | Publication date (day/month/year) |
|---|---|---|---|
| JP 2012-219115 A | 12 November 2012 | (Family: none) | |
| JP 2015-511264 A | 16 April 2015 | US 2013/0217806 A1<br>claims, paragraphs [0001], [0012], [0054]-[0063], [0079]-[0083], [0086]-[0095]<br>WO 2013/124251 A2<br>EP 2817349 A1<br>CN 104136483 A | |
| JP 2014-118576 A | 30 June 2014 | US 2014/0171551 A1<br>entire text<br>EP 2746328 A1<br>CN 103865035 A | |
| JP 2017-115134 A | 29 June 2017 | EP 3178861 A1<br>entire text<br>US 2018/0162991 A1<br>CN 106947061 A | |
| JP 2016-503114 A | 01 February 2016 | EP 2752437 A1<br>entire text<br>WO 2014/108305 A2<br>US 2015/0337076 A1<br>CN 104870509 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104151780 A
- JP 2015511264 A